# EUROPÄISCHE PATENTANMELDUNG

(11) **EP 0 797 366 A2**
(43) Veröffentlichungstag der Anmeldung: **24.09.1997**
(21) Anmeldenummer: 97102461.7
(22) Anmeldetag: 15.02.1997
(51) Int. Cl.: H04Q 7/22, H04Q 7/26, H04M 1/72

(54) **Datenübertragung im Sprachkanal von DECT-Anlagen**

(30) Priorität: 19.03.1996 DE 19610777
(71) Anmelder: DeTeWe - Deutsche Telephonwerke Aktiengesellschaft & Co., 10997 Berlin (DE)
(72) Erfinder: Antonov, Iavor, Dr., 10117 Berlin (DE)

(57) **Zusammenfassung**

Es wird ein Verfahren zur Datenübertragung im Sprachkanal zwischen Basisstation und Mobilstation schnurloser Telekommunikationsanlagen mit Funkschnittstellen nach dem DECT-Standard und Sprachcodierungseinrichtungen vorgeschlagen, bei dem Schnittstellen (a/b, NF, V) an den Mobilstationen (MS) zum Anschluß von Datensende- und -empfangsgeräten vorgesehen werden, die über ein Modem (M) und einen Protokollrechner (PR) an die Sende-/Empfangseinrichtung (HF) geführt sind, in den Basisstationen (BSA, BSD) werden zwischen den Amtsleitungsanschlüssen (A/B, ISDN) und der Sende-/Empfangseinrichtung (HF) ein Protokollrechner (PR) und bei einer analog gesteuerten Basisstation (BSA) zusätzlich ein Modem (M) eingesetzt und bei einer Datenübertragung durch die Protokollrechner (PR) werden die Sprachcodierungseinrichtungen (ADPCM) der an der Datenübertragung beteiligten Basisstationen (BSA, BSD) und der Mobilstationen (MS) abgeschaltet.

## Beschreibung

Die Erfindung betrifft ein Verfahren zur Datenübertragung im Sprachkanal zwischen Basisstation und Mobilstation schnurloser Telekommunikationsanlagen mit Funkschnittstellen nach dem DECT-Standard und Sprachcodierungseinrichtungen.

Für schnurlose Telekommunikationsanlagen ist ein europäischer Standard festgelegt, der die Übertragungsverfahren und die Frequenzbänder zur schnurlosen Kommunikation in analogen und digitalen Telefonnetzen umfaßt. Dieser DECT-Standard (Digital European Cordless Telecommunication) bezieht sich auf die Funkschnittstelle zwischen mobilen drahtlosen Endgeräten und an ein Telekommunikationssystem fest angeschlossenen Basisstationen. Derartige Systeme arbeiten mit einer sogenannten ADPCM-Sprachcodierungseinrichtung (Adaptive Differential Puls Code Modulation), einer Sprachcodierung von 32 kbit/s, die eine Zeitmultiplexübertragung und einen Zeitmultiplexempfang im gleichen Frequenzkanal gestattet.

Eine ungesicherte ADPCM-codierte Datenübertragung im Sprachkanal eines DECT-Systems unterliegt starken Störungen. Dadurch können unerwartete Fehlreaktionen der angeschlossenen Datenübertragungseinrichtungen, wie z. B. Verlust der Synchronisation und Abbruch der Verbindung hervorgerufen werden. Die Hauptursache ist die im DECT-System vorhandene hohe Bit-Fehlerrate.

Um im DECT-System bei der Übertragung der Sprache ein störendes Rauschen, Knacken oder ähnliches zu vermeiden, werden verschiedene Maßnahmen getroffen, wie z. B. Rauschsperrung oder Wiederholung von Pulsrahmen. Mit diesen Maßnahmen wird jedoch die Form des Ursprungsignals so verfälscht, daß sie nicht mehr rekonstruierbar ist. Für die Sprachübertragung hat das eine untergeordnete Bedeutung, da das Ohr gegenüber Störungen unempfindlicher ist.

Wenn das DECT-System keine Unterscheidung zwischen Datenübertragung und Sprache vornimmt und es für Sprachübertragung optimiert ist, ist die Datenübertragung nur sehr eingeschränkt möglich.

Der Erfindung lag die Aufgabe zugrunde, für die Datenkommunikation über einen DECT-Sprachkanal eine technische Lösung aufzuzeigen, die keiner Ergänzung der Steuerung des Sprachkanals bedarf, wobei als Sprachkanal der Standardsprachkanal mit jeweils 32 kbit/s in beiden Richtungen vorgegeben ist.

Diese Aufgabe ist durch die Erfindung gelöst, wie sie im Patentanspruch 1 aufgezeigt ist. Weitere vorteilhafte Merkmale der Erfindung sind Gegenstand der Unteransprüche.

Nachfolgend wird die Erfindung anhand einer aus drei Figuren bestehenden Zeichnung näher beschrieben. In der Zeichnung zeigen die
- Fig. 1: das Blockschaltbild einer Mobilstation MS, die
- Fig. 2: das Blockschaltbild einer analogen Basisstation BSA und die
- Fig. 3: das Blockschaltbild einer digitalen Basisstation BSD.

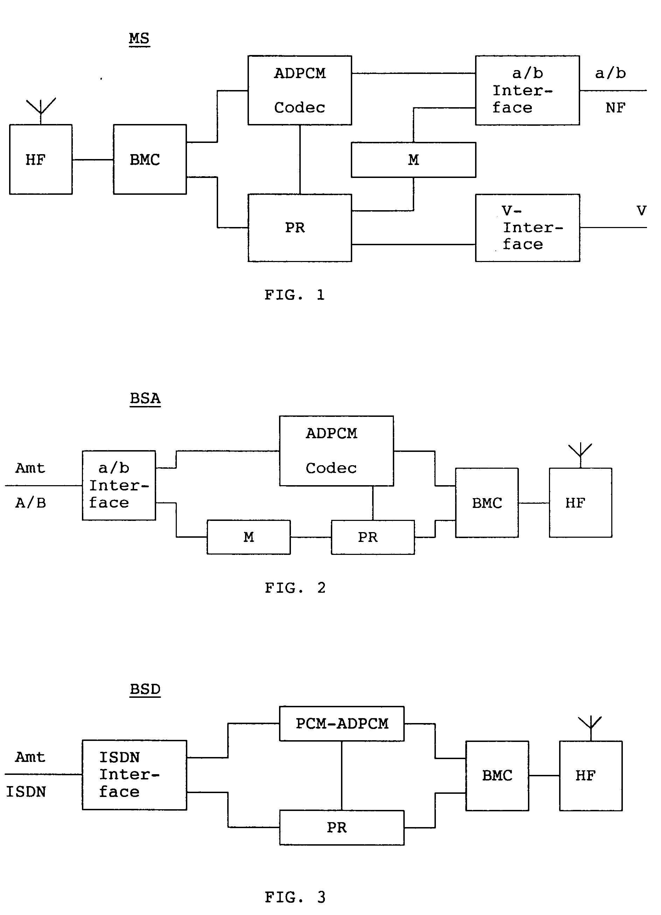

Eine Mobilstation MS nach Figur 1 weist einen Anschluß mit F- und N-codierten Stecker NF für Fernsprech- und Nicht-Fernsprechbetrieb auf, an dem beispielsweise ein Modem oder ein Faxgerät anschließbar ist, sowie einen V.24-Schnittstellenanschluß, z. B. für den Anschluß eines Personalcomputers (PC). Über eine Interfaceschaltung a/b ist der NF-Anschluß mit einem ADPCM-Codec verbunden, der seinerseits über einen Burst-mode-controller BMC für einen Kanal an die
Sende-/Empfangseinrichtung HF angeschlossen ist. Die V-Schnittstelle ist über eine Interfaceschaltung und einen Protokollrechner PR an den Burst-mode-controller BMC geführt. Zwischen dem Protokollrechner PR und die a/b-Schnittstelle ist ein Modem M geschaltet, wobei die digitale Seite des Modems M mit dem Protokollrechner PR verbunden ist. Mittels dieses Modems M wird die a/b-Leitung auf Vorhandensein einer modemspezifischen Signalisierung überwacht. Durch den Anschluß der digitalen Interfaceschaltung der V-Schnittstelle besteht die Möglichkeit, eine Anforderung zur Datenübertragung während einer Gesprächsverbindung über die a/b-Leitung zu erkennen.

Bei einem Ruf wird die Rufwechselspannung an die a/b-Schnittstelle gelegt und die Ruf-Indicator-Leitung des V-Interfaces gesetzt. Das Gerät, das das zuerst einen Interface belegt, erhält die Möglichkeit zur Datenübertragung. Während der Datenübertragung wird durch den Protokollrechner PR der ADPCM-Codec abgeschaltet. Der Protokollrechner PR übernimmt zugleich die Datensicherung auf der Funkschnittstelle (DECT-Strecke).

Die analoge Basisstation BSA eines DECT-Systems nach Figur 2 wird entsprechend der Mobilstation MS mit einem Modem M und einem Protokollrechner PR ausgestattet. Die Amtsleitungen A/B werden somit parallel zum ADPCM-Codec geführt. Die digitale Seite des Modems M analysiert der Protokollrechner PR, um einem Datenübertragungswunsch zu erkennen. Während einer Datenübertragung wird der ADPCM-Codec wie bei der Mobilstation MS durch den Protokollrechner abgeschaltet, der außerdem die Datensicherung auf der DECT-Strecke zwischen Basisstation BSA und Mobilstation MS realisiert.

Bei einer digitalen Basisstation BSD eines DECT-Systems nach Figur 3, z.B. nach ISDN-Standard, ist ein Modem nicht erforderlich. Dessen Funktion wird von einem leistungsfähigen Protokollrechner PR übernommen, der direkt die digitalen Informationen des Basiskanals bearbeitet. Im Fall einer Datenübertragung wird PCM-ADPCM-Umwandlung abgeschaltet, um einen direkten Zugriff auf die Daten der DECT-Strecke zu gewährleisten.

Für das Verfahren zum Übertragen von Daten in einem deratigen DECT-System sind verschiedene Varianten möglich:
Externe Datenübertragung bei einem analogen a/b-Anschluß der Basisstation;
Externe Datenübertragung bei einem digitalen ISDN-Anschluß der Basisstation mit den Untervarianten kommender und gehender Ruf;
Interne Datenübertragung zwischen zwei Mobilteilen und einer Basistation.

Für sämtliche Varianten ist ein automatisches Erkennen der Dienste vorgesehen. In den Fällen, in denen dies nicht möglich ist, wird ein Gerät, das den Ruf annimmt, als dienstebestimmend gewertet, wie z.B. Telefon, Standard-Faxgerät, V24-PC-Fax.

Bei einer externen Datenübertragung bei einem analogen a/b-Anschluß der Basisstation BSA wird bei Belegen durch ein Telefon oder ein Faxgerät immer zuerst eine akustische Verbindung erstellt, da nicht eindeutig zu bestimmen ist, ob eine gehende oder kommende Verbindung zustande kommt. Das Modem M in der Basisstation BSA ist parallel an das a/b-Interface angeschlossen. Das Modem M der Mobilstation ist ebenfalls parallel an sein a/b-Interface angeschlossen. Nach einer evtl. Wahl, ggf. mit Hörtonauswertung, wird beim Erkennen eines möglichen Faxsignals die akustische Verbindung unterbrochen, bis entweder eines der beiden Modems M in Synchronisation geht oder keine Synchronisation zustande kommt. Falls eine Synchronisation in der Basisstation BSA besteht, wird veranlaßt, daß das Modem M in der Mobilstation MS eine Datenverbindung aufbaut. Falls eine Synchronisation in der Mobilstation MS zustande kommt, baut das Modem M der Mobilstation MS eine Datenverbindung auf. Anschließend wird die Datenübertragung über die Protokollrechner PR veranlaßt. Diese Verbindung bleibt bestehen, solange Daten übertragen werden. Bei Verlust der Synchronisation wird die Verbindung ausgelöst, um zu verhindern, daß evtl. eine Modemverbindung über den akustischen Weg zustande kommt.

Belegt an der Mobilstation MS ein Personalcomputer an einen V-Anschluß, so erkennt der Protokollrechner PR in der Mobilstation den PC und übermittelt dies der Basisstation BSA. Diese schaltet das Modem M an dem a/b-Interface ein und wartet auf die Synchronisation. In diesem Fall wird keine akustische Verbindung aufgebaut. Nach dem Ende der Datenübertragung wird die Verbindung ausgelöst.

Bei einer externen Datenübertragung bei einem ISDN-Anschluß der Basisstation BSD und einem kommenden Ruf wird nach Überprüfen der Kompatibilität entschieden, ob und an welcher der beiden Basiskanäle belegt bzw. gerufen wird. Bei einem Teledienst, z. B. "7 kHz telephony" wird der Ruf abgewiesen. Bei einem Teledienst, z. B. "Facsimile G4" wird nur der V-Anschluß angesprochen. Falls ein angeschlossener PC mit einem speziellen Treiber, der bestimmte Protokolle unterstützt, belegt, wird eine Datenverbindung zwischen PC und ISDN ohne Modems M realisiert.

Bei einem Teledienst, z. B. "ISDN telephony 3,1 kHz" wird sowohl der a/b-Anschluß als auch das Ring-Indicator-Signal an dem V-Anschluß aktiviert.

Falls der a/b-Anschluß belegt wird, wird eine akustische Verbindung realisiert, so daß der Protokollrechner PR in der Basisstation BSD und das Modem M in der Mobilstation MS auf den jeweiligen Leitungen ein Faxsignal dekodieren können. In diesem Fall wird die akustische Verbindung abgebrochen, um eine Datenverbindung aufzubauen.

Ist der V-Anschluß belegt worden, wird direkt eine Datenverbindung mit der Basisstation BSD aufgebaut.

Bei einem gehenden Ruf einer an einem ISDN-Anschluß angeschlossenen Basisstation BSD wird bei Belegen des a/b-Anschlusses der Mobilstation MS zunächst eine akustische Verbindung hergestellt. Nach der Wahl sind das Modem M der Mobilstation MS und der Protokollrechner PR der Basisstation BSD so geschaltet, daß ein Faxsignal dekodiert werden kann. In diesem Fall wird die akustische Verbindung abgebrochen und eine Datenverbindung realisiert. Nach Ende der Übertragung wird die Verbindung ausgelöst.

Ist der V-Anschluß der Mobilstation MS belegt worden, wird direkt eine Datenverbindung mit der Basisstation BSD aufgebaut.

Eine interne Datenübertragung zwischen zwei Mobilstationen MS einer Basisstation BSA oder BSD wird nach Belegen über die jeweiligen a/b-Anschlüsse aufgebaut, nachdem einer der Modems M in den Mobilstationen MS ein Faxsignal während der akustischen Verbindung erkennt.

Falls über die V-Anschlüsse der Mobilstationen MS belegt wird, wird direkt eine Datenverbindung aufgebaut. Die Protokollrechner PR der beiden Seiten müssen dabei die Standard-Modem-Befehle auf geeignete Weise ausfiltern.

## Patentansprüche

1. Verfahren zur Datenübertragung im Sprachkanal zwischen Basisstation und Mobilstation schnurloser Telekommunikationsanlagen mit Funkschnittstellen nach dem DECT-Standard und Sprachcodierungseinrichtungen, dadurch gekennzeichnet, daß Schnittstellen (a/b, NF, V) an den Mobilstationen (MS) zum Anschluß von Datensende- und -empfangsgeräten vorgesehen werden, die über ein Modem (M) und einen Protokollrechner (PR) an die Sende-/Empfangseinrichtung (HF) geführt sind, daß in den Basisstationen (BSA, BSD) zwischen den Amtsleitungsanschlüssen (A/B, ISDN) und der Sende-/Empfangseinrichtung (HF) ein Protokollrechner (PR) und bei einer analog gesteuerten Basisstation (BSA) zusätzlich ein Modem (M) eingesetzt werden und daß bei einer Datenübertragung durch die Protokollrechner (PR) die Sprachcodierungseinrichtungen (ADPCM) der an der Datenübertragung beteiligten Basisstationen (BSA, BSD) und der Mobilstationen (MS) abgeschaltet werden.

2. Verfahren nach Anspruch 1, dadurch gekennzeichnet, daß der Protokollrechner (PR) zusätzlich zur Datensicherung auf der Funkschnittstelle verwendet wird.

3. Verfahren nach Anspruch 1, dadurch gekennzeichnet, daß bei einer Datenübertragung zwischen analogem Anschluß der Mobilstationen (MS) und der Basisstationen (BSA, BSD) immer zunächst eine akustische Verbindung aufgebaut wird.

4. Verfahren nach Anspruch 1, dadurch gekennzeichnet, daß bei einem digitalen Anschluß (ISDN) der Basisstationen (BSD) und kommendem Ruf erst nach Überprüfen der Kompatibilität der zu nutzende Basiskanal bestimmt wird.
